# EUROPÄISCHE PATENTSCHRIFT

(11) **EP 0 964 882 B1**
(45) Veröffentlichungstag und Bekanntmachung des Hinweises auf die Patenterteilung: **07.08.2002**
(21) Anmeldenummer: 98910728.9
(22) Anmeldetag: 05.03.1998
(51) Int. Cl.: C08G 59/14, C08F 299/02, D06N 1/00

(54) **VERFAHREN ZUR HERSTELLUNG VON FLÄCHENGEBILDEN AUF BASIS NACHWACHSENDER ROHSTOFFE**
PROCESS FOR PREPARATION OF FLAT STRUCTURES MADE OF RENEWABLE RAW MATERIALS
PROCEDE DE PREPARATION DES STRUCTURES PLATES EN MATIERES PREMIERS RENOUVELABLES

(30) Priorität: 07.03.1997 DE 19709477
(43) Veröffentlichungstag der Anmeldung: 22.12.1999
(73) Patentinhaber: DLW Aktiengesellschaft, D-74321 Bietigheim-Bissingen (DE)
(72) Erfinder: ESS, Milko, D-71691 Freiberg (DE); KASTL, Bernd, D-74321 Bietigheim-Bissingen (DE); JUNG, Bernhard, D-74189 Weinsberg (DE)
(74) Vertreter: Müller-Boré & Partner Patentanwälte
(86) Internationale Anmeldenummer: EP9801252
(87) Internationale Veröffentlichungsnummer: WO9840427

(56) Entgegenhaltungen:
- EP-A- 0 228 116
- EP-A- 0 437 001
- EP-A- 0 539 916
- US-A- 4 203 816
- US-A- 5 318 808
- DATABASE WPI Week 8242 Derwent Publications Ltd., London, GB; AN 89243e XP002068133 "ultraviolet cure resin composition" & JP 57 147 540 A (TOSHIBA CHEMICAL) 11.September 1982
- DATABASE WPI Week 7943 Derwent Publications Ltd., London, GB; AN 78103b XP002068134 "photohardenable resin composition" & JP 54 118 499 A (ARAKAWA KAGAKU) 13.September 1979

## Beschreibung

Die vorliegende Erfindung betrifft ein Verfahren zur Herstellung von Flächengebilden auf Basis nachwachsender Rohstoffe, welche Polyreaktionsprodukte-enthaltende Materialien, insbesondere in der Deckschicht bzw. dem Deckstrich enthalten.

Linoleum als elastischer Bodenbelag auf Basis nachwachsender Rohstoffe ist seit langem bekannt. Aufgrund seiner natürlichen Bestandteile hat Linoleum einen hohen baubiologischen und ökologischen Stellenwert erlangt. Jedoch erfordert die Herstellung von Linoleumbelägen im letzten Verfahrensschritt eine mehrere Wochen dauernde Wärmebehandlung, die sogenannte "Reifezeit".

Aus der DE-A-41 35 664 sind Beschichtungsmassen bekannt, die auf nachwachsenden Rohstoffen basieren und zum Beschichten von textilen Flächengebilden oder von Releasepapier dienen. Die Beschichtungsmassen bestehen aus einer Kombination von Epoxidierungsprodukten von Estern ungesättigter Fettsäuren und Teilestern von Polycarbonsäuren mit Polyetherpolyolen sowie einem Hydrophobierungsmittel. Diese Beschichtungsmassen werden zur Herstellung von Bodenbelägen verwendet. Nachteilig ist jedoch, daß die oberste Schicht derart hergestellter Beläge sehr rauh und nicht transparent ist und eine bei der thermischen Vernetzung entstandene Verfärbung zeigt. Ferner erfordern die Rückenbeschichtungen eine umständliche Herstellung mit teuererem Trennpapier, und weisen keinen Schaum auf und sind damit ohne Trittkomfort. Weiterhin zeigt sich, daß die Oberfläche dieser Beläge nicht genügend schmutzabweisend ist und eine schlechte Durchhärtung aufweist.

Aus der WO 96/15203 sind streichfähige Beschichtungsmassen zur Herstellung von Flächengebilden auf Basis nachwachsender Rohstoffe bekannt. Die Herstellung dieser Flächengebilde und insbesondere der Deck- bzw. Nutzschicht erfolgt jedoch durch thermische Vernetzung der Beschichtungsmassen, was u.a. eine Gelbfärbung der Deckschicht zur Folge hat.

Somit liegt der vorliegenden Erfindung die Aufgabe zugrunde, ein neues Verfahren zur Herstellung von Flächengebilden auf Basis nachwachsender Rohstoffe bereitzustellen, die insbesondere nicht die zeitintensive Reifezeit von Linoleumbelägen benötigen und im wesentlichen keine Verfärbung der Deck- bzw. Nutzschicht aufweisen. Ferner sollen diese Flächengebilde ausgezeichnete Materialeigenschaften aufweisen.

Diese Aufgabe wird durch die in den Ansprüchen gekennzeichneten Ausführungsformen gelöst. Insbesondere wird ein Verfahren zur Herstellung eines Flächengebildes aus mindestens einer Trägerschicht (I) und mindestens einem Deckstrich (II), gegebenenfalls einem unter der Trägerschicht (I) angeordneten Rückenstrich (III) aus einer chemisch oder mechanisch geschäumten Schaumschicht, gegebenenfalls einem Kompakt- oder Grundstrich (IV), der zwischen Trägerschicht (I) und Deckstrich (II) und/oder zwischen Trägerschicht (I) und Rückenstrich (III) angeordnet ist, gegebenfalls eine unter dem Deckstrich (II) angeordnete chemische Schaumschicht (V) bereitgestellt, wobei die Beschichtungsmassen für die Schichten (II), (III), (IV) und (V) ein durch Umsetzung von mindestens einer Di- oder Polycarbonsäure oder deren Derivaten oder einem Gemisch davon mit mindestens einem Epoxidierungsprodukt eines Carbonsäureesters oder einem Gemisch dieser Epoxidierungsprodukte erhältliches Polyreaktionsprodukte-enthaltendes Material enthalten, worin mindestens die Schicht (II) im wesentlichen mit UV-Strahlung in Gegenwart von mindestens einem UV-Initiator, der in die Mischung für die auszuhärtende Schicht compoundiert wird, und/oder mit Elektronenstrahlung und/oder IR-Strahlung gehärtet wird.

Die erfindungsgemäß verwendeten UV-Initiatoren können radikalische oder kationische UV-Initiatoren oder ein Gemisch dieser UV-Initiatortypen sein. Bevorzugte Beispiele radikalischer UV-Initiatoren sind Benzophenon, Benzophenon-Derivate, Phosphinoxide, α-Morpholinoketone, Chinon, Chinon-Derivate oder α-Hydroxyketone, oder Gemische davon. Bevorzugte Beispiele kationischer UV-Initiatoren sind Triarylsulfoniumsalze, die von einem Typ sind oder als Gemisch verschiedener Triarylsulfoniumsalze vorliegen können, oder Diaryliodoniumsalze, oder Gemische davon. Die UV-Initiatoren liegen beispielsweise in einer Menge von bis zu 8 Gew.-%, vorzugsweise 0,1 bis 3 Gew.-%, bezogen auf die Menge des Reaktionsprodukte-enthaltenden Materials, vor.

In einer erfindungsgemäßen Ausführungsform kann neben dem UV-Initiator mindestens ein Photosensibilisator, wie beispielsweise Verbindungen auf der Basis von Anthracen, Perylen oder Thioxanthen-9-on, vorliegen, welcher den UV-Initiator aktivieren und dessen Wirkung verstärken kann. Dadurch kann die Konzentration des UV-Initiators reduziert werden. Die erfindungsgemäß eingesetzte UV-Strahlung liegt in dem allgemein üblichen Bereich, d.h. zwischen 200 nm und 380 nm. Die erfindungsgemäß eingesetzte IR-Strahlung liegt in dem allgemein üblichen Bereich, beispielsweise 760 nm bis 0,5 mm.

Vorzugsweise enthalten die Di- oder Polycarbonsäuren bzw. deren Derivate mindestens eine Doppelbindung pro Molekül.

Als Dicarbonsäure können vorzugsweise Maleinsäure, Itaconsäure, Fumarsäure, Bernsteinsäure, Methylbernsteinsäure, Äpfelsäure oder Furandicarbonsäure oder ein mindestens zwei dieser Säuren enthaltendes Gemisch davon verwendet werden. Als Polycarbonsäure können vorzugsweise Säuren mit drei oder mehr Carbonsäuregruppen, wie beispielsweise Citronensäure und Aconitsäure, eingesetzt werden.

Als Derivate der Di- oder Polycarbonsäuren können Anhydride oder Teilester oder Derivate, die mindestens eine freie Carbonsäuregruppe aufweisen, eingesetzt werden. Die Alkohol-Komponente der Teilester unterliegt keiner besonderen Beschränkung, wobei jedoch vorzugsweise Polyole wie Dipropylenglykol, Propandiole. Butandiole, Hexandiole, Hexantriole, Glycerin oder Pentaerythrit oder ein mindestens zwei dieser Polyole enthaltendes Gemisch davon als Alkohol-Komponente eingesetzt werden.

In einer besonders bevorzugten Ausführungsform wird ein Gemisch eines Teilesters aus Maleinsäureanhydrid und Dipropylenglykol zusammen mit Citronensäure als Vernetzer eingesetzt, wobei der Anteil der Citronensäure bis zu 50 Gew.-%, mehr bevorzugt bis zu 25 Gew.-%, bezogen auf die Gesamtmenge des Vernetzers, beträgt.

Das Epoxidierungsprodukt enthält vorzugsweise mehr als eine Epoxygruppe pro Molekül. Als Epoxidierungsprodukt eines Carbonsäureesters kann vorzugsweise epoxidiertes Leinöl, epoxidiertes Sojaöl, epoxidiertes Rizinusöl, epoxidiertes Rapsöl oder Vernoniaöl oder ein mindestens zwei dieser epoxidierten Produkte
enthaltendes Gemisch davon verwendet werden. Als Alkohol-Komponente dieser Carbonsäureester können auch die vorstehend definierten Alkohole der Teilester, wie beispielsweise Dipropylenglykol, Propandiole, Butandiole, Hexandiole, Hexantriole oder Pentaerythrit oder ein mindestens zwei dieser Polyole enthaltendes Gemisch davon eingesetzt werden. Die Carbonsäure-Komponenteunterliegt keiner besonderen Beschränkung.

Ferner kann das Polyreaktionsprodukte-enthaltende Material mindestens einen weiteren Zusatzstoff, bestehend aus Füllstoffen, Pigmenten zur Dessinierung, Treibmitteln bzw. Schäumungsmitteln, Hydrophobierungsmitteln und Hilfsstoffen, enthalten.

Die Füllstoffe sind vorzugsweise Holzmehl, Kreide, Korkmehl, Bariumsulfat ("Schwerspat"), Kieselsäure, Kaolin, Talkum, Lignin, Cellulose, Glas, Textil- oder Glasfasern oder Pflanzenfasern, Cellulosefasern, Polyesterfasern oder beispielsweise gefärbte Granulate bzw. Chips aus dem erfindungsgemäßen Polyreaktionsprodukte-enthaltendem Material oder ein mindestens zwei dieser Stoffe enthaltendes Gemisch davon. Besonders bevorzugt ist Holzmehl, Kreide, Cellulose, Lignin oder Korkmehl oder ein mindestens zwei dieser Füllstoffe enthaltendes Gemisch davon als Füllstoff.

Als Hilfsstoffe können beispielsweise Tallöle, synthetische oder natürliche Harze, wie beispielsweise Balsamharz, Kopale, Kohlenwasserstoffharze, und/oder Sikkative, wie beispielsweise Verbindungen der Metalle Al, Li, Ca, Fe, Mg, Mn, Pb, Zn, Zr, Ce oder Co oder eine mindestens zwei dieser Verbindungen enthaltende Kombination davon, verwendet werden.

Die Plächengebilde, d.h. beispielsweise Bodenbeläge oder Fliesen, werden vorzugsweise derart hergestellt, daß eine Kombination der vorstehend definierten Di- oder Polycarbonsäuren bzw. deren Derivate und Epoxidierungsprodukte im Gewichtsverhältnis von 1:0,3 bis 1:8, insbesondere 1:0,5 bis 1:3, 1:0,6 bis 1:1,2 sowie 1:1 bis 1:4, Füllstoffe und bei der Masse für den Deckstrich ggf. Hydrophobierungsmittel und bei der Masse für einen chemischen Schaum ein Treibmittel und gegebenenfalls für jede Schaummasse einen Schaumstabilisator vermischt und zu einer Paste verarbeitet und diese Pasten dann zu mehrschichtigen Bodenbelägen verarbeitet werden. Vorzugsweise enthält die Beschichtungsmasse für den Deckstrich (II) das Hydrophobierungsmittel in einer Menge von 7 bis 44 Gew.-%, bezogen auf die Menge des Reaktionsprodukte-enthaltenden Materials.

Die Streichpasten für das erfindungsgemäß hergestellte Flächengebilde können alle größere Füllstoffmengen enthalten, wobei im Kompaktstrich vorzugsweise 10 bis 60 Gew.%, insbesondere 30 Gew.%, und im chemischen Schaum 20 bis 65 Gew.%, vorzugsweise 35 Gew.%, Füllstoff eingesetzt werden, während in den Massen für den mechanischen Schaum meist nur wenig, vorzugsweise nicht mehr als 10 Gew.%, z.B. 1 bis 10 Gew.%, noch bevorzugter nicht mehr als 5 Gew.%, Füllstoff enthalten sind. Alle %-Angaben sind immer auf die Gesamtmenge des Reaktionsprodukte-enthaltenden Materials bezogen, wenn nichts anderes angegeben ist.

Der Deckstrich (II) kann transparent sein oder durch Zumischen von vorstehend definierten Zusatzstoffen wie beispielsweise Cellulose jede gewünschte Ausgestaltung zeigen. Wenn der Deckstrich transparent ist, enthält die Beschichtungsmasse für den Deckstrich (II) vorzugsweise nicht mehr als 8 Gew.-%, mehr bevorzugt nicht mehr als 2 Gew.-% Füllstoffe. Ferner kann bei einem transparenten Deckstrich (II) die darunterliegende Schicht bedruckt werden und somit ein bedrucktes Flächengebilde erhalten werden, das hohe mechanische Festigkeit und sehr gute schmutzabweisende Eigenschaften hat. Als Beispiel für eine solche Anwendung sei auf einen Mehrschichtbelag mit Parkettmuster, aber auch auf Wachstuche und Kunstleder oder Schutzschichten für Glas verwiesen.

Die Beläge enthalten verhältnismäßig hohe Anteile an Zusatzstoffen, insbesondere mineralischen Füllstoffen aus der Gruppe Kreide, Bariumsulfat, Kieselsäure, Kaolin und Talkum, jedoch ggf. auch an Holzmehl, Korkmehl, Glasmehl, Cellulose, Lignin, Textilfasern oder Pflanzenfasern, die auch im Gemisch vorliegen können, wobei die Füllstoffmenge im gesamten Bodenbelag bis zu 70 Gew.-%, bei schaumfreien Belägen vorzugsweise 30 bis 60 Gew.-% und bei Bodenbelägen mit chemisch geschäumten Schichten vorzugsweise 40 bis 60 Gew.-% des gesamten Bodenbelages betragen kann.

Bei Massen für chemisch geschäumte Schichten liegt die Menge an Treibmittelstoffen im üblichen Bereich bis zu ca. 15 Gew.-%, wobei sonstige übliche Hilfsstoffe ca. bis zu 15 Gew.-% betragen können.

Vorzugsweise bestehen die Bodenbeläge aus drei, vier oder fünf Lagen, beispielsweise einem einfachen Aufbau aus einem gegebenenfalls bedruckten Träger wie Pappe, einem Deckstrich und einer Schutzschicht, oder einem Aufbau aus einem Kompakt-, evtl. einem chemischen Schaum- und einem transparenten Deckstrich und einem Träger- und gegebenenfalls einem chemisch geschäumten Rückenstrich, wobei der chemische Schaum natürlich auch durch einen mechanischen Schaum ersetzt sein kann oder beide Sorten von Schaum vorliegen können. Falls zwischen dem Kompaktstrich und dem Deckstrich eine chemisch ge schäumte Schicht (V) angeordnet wird, kann diese in einer besonderen Ausführungsform der Erfindung chemisch geprägt werden. Diese geschäumte Schicht (V) kann auch das vorzugsweise UV-gehärtete, vorstehend definierte Polyreaktionsprodukte-enthaltende Material umfassen. Dazu trägt man auf dem Kompaktstrich eine Paste auf. Diese Paste enthält ein Treibmittel und einen Kicker; darunter versteht man Polyole, Harnstoff, Zink-, Blei- oder Cadmiumverbindungen, wobei ZnO bevorzugt ist, welche die Zersetzungstemperatur des Treibmittels erniedrigen. Der Pastenstrich wird nun unterhalb der Zersetzungstemperatur des Treibmittels vernetzt. In der nächsten Fabrikationsstufe wird die bestrichene Paste mit dem Tiefdruckmuster versehen. Den Druckfarben, die im fertigen Belag tief sein sollen, wird ein Inhibitor zugesetzt. Der Inhibitor schwächt die Wirkung des Kickers oder hebt sie ganz auf, so daß die Zersetzung des Treibmittels nach höheren Temperaturen verschoben wird. Geeignete Substanzen mit Inhibitorwirkung sind z.B. Benzotriazolderivate, Trimellithsäureanhydrid und dergleichen. Durch Variation der Menge des zugesetzten Inhibitors lassen sich verschiedene Relieftiefen erreichen. Über dieser chemisch geschäumten Schicht mit aufgebrachtem Reliefmuster und dem darüberliegenden Deckstrich kann dann eine Schutzschicht (VI) aus Polymeren bzw. Copolymerisaten oder Wachsen angeordnet werden. Beispiele für diese ungesättigten härtbaren Lacksysteme sind Polyacrylate, Polymethacrylate, Polyurethane und Mischungen derselben. Es kann aber auch z.B. Carnaubawachs eingesetzt werden. Die Schutzschicht sollte aus mit dem Deckstrich verträglichen (Co)Polymeren hergestellt sein.

Überraschenderweise zeigt sich bei den erfindungsgemäß hergestellten Flächengebilden, daß durch die Härtung der Beschichtungsmasse für den Deckstrich (II) mittels UV- bzw. Elektronenstrahlung bzw. IR-Strahlung im wesentlichen keine Verfärbung, insbesondere Gelbfärbung, der Deck- bzw. Nutzschicht auftritt.

Bei dem erfindungsgemäßen Verfahren handelt es sich insbesondere um ein kontinuierliches Verfahren, welches ähnlich der CV-Herstellung nacheinander mit unterschiedlichen Pasten einen Gesamtaufbau eines Bodenbelages beschreibt. Ein solches Verfahren kann auch, wie schon erwähnt, die Schäumung, insbesondere die chemische Schäumung umfassen und führt zu einem Belag mit Bedruckbarkeit.

In einer Ausführungsform des erfindungsgemäßen Verfahrens wird die Schicht (II) mit UV-Strahlung teilweise gehärtet, danach erfolgt eine Prägung der teilweise gehärteten Schicht (II) und anschließend wird die geprägte, teilweise gehärtete Schicht (II) mit UV-Strahlung und/oder Elektronenstrahlung und/oder IR-Strahlung und/oder thermisch ausgehärtet.

Die Herstellung des Belages erfolgt zum Beispiel, indem die Komponenten zu einer Paste vermischt, mittels Beschichtungsvorrichtungen auf eine Bahn in entsprechender Dicke aufgetragen, gegebenenfalls aufgeschäumt und, wie vorstehend beschrieben, verfestigt werden. Es können auch schaummittelhaltige und schaummittelfreie Schichten zu einer Bahn verbunden und gleichzeitig oder in aufeinanderfolgenden Schritten aufgeschäumt und verfestigt werden.

Acrylate als Hilfsstoffe, wie z.B. Polymethylmethacrylat, können in die Nutzschicht eingearbeitet werden, um die Haftung zwischen dem aufgebrachten UV-Lack und der Nutzschicht, d.h. dem Deckstrich zu verbessern. Weiterhin kann als Hilfsstoff Leinöl im Deckstrich in Mengen von bis zu 15 Gew.-% enthalten sein.

Als Treibmittel können im Rückenstrich 1 bis 5 Gew.-% Azodicarbonsäureamid oder Sulfohydrazide verwendet werden, wobei insbesondere 3 Gew.-% Treibmittel bevorzugt sind. Wie bereits oben erwähnt ist, können auch Kicker bei dem chemischen Prägeverfahren eingesetzt werden, um die Zersetzungstemperatur des Treibmittels zu erniedrigen. Erfindungsgemäß wird hier insbesondere Zinkoxid eingesetzt.

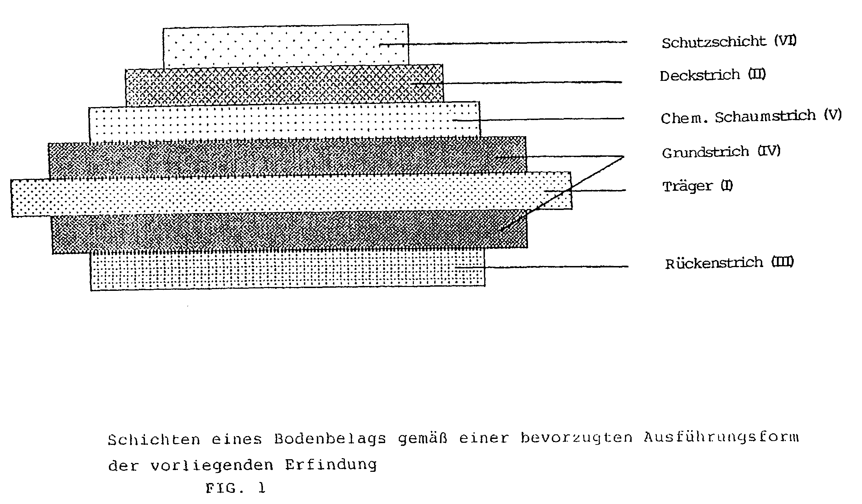

Figur 1 zeigt eine bevorzugte Ausführungsform des erfindungsgemäß hergestellten Flächengebildes mit einem Träger (I), der auf beiden Seiten einen Grundstrich (IV) aufweist, einem unten angeordneten Rückenstrich (III), einem auf dem obenliegenden Grundstrich angeordneten chemischen Schaumstrich (V), einem darüberliegend angeordneten Deckstrich (II) und einer oben angeordneten Schutzschicht (VI).

In einer anderen Ausführungsform der vorliegenden Erfindung kann das vorstehend definierte Polyreaktionsprodukte-enthaltende Material als Rückseiten-Beschichtung für ein textiles Flächengebilde wie z.B. Bodenbeläge verwendet werden.

Die folgenden Beispiele erläutern die Erfindung. Es zeigt die UV-Vernetzung des Deckstrichs, und zwar in einem bevorzugtem Bereich der Bestandteile.

### Beispiel 1

51 g epoxidiertes Leinöl werden mit 1,1 g eines kationischen Photoinitiators auf Triarylsulfoniumsalzbasis, 2 g hochdisperser Kieselsäure, 3 g Polymethylmethacrylat und 2 g Leinöl vermischt. Dazu gibt man 48 g eines Teilesters aus Maleinsäureanhydrid und Dipropylenglykol und compoundiert die Mischung in einem handelsüblichen Labordissolver.

Nach dem Entgasen der Mischung wird die Masse in üblicher Weise auf eine Trägerpappe aufgerakelt und unter UV-Licht mit einer Wellenlänge von 295 bis 400 nm ausgehärtet.

Der so erhaltene Deckstrich ist farblos und nicht klebrig.

### Beispiel 2

51 g epoxidiertes Leinöl werden mit 0,8 g eines kationischen Photoinitiators auf Triarylsulfoniumsalzbasis, 2 g hochdisperser Kieselsäure, 3 g Polymethylmethacrylat und 2 g Leinöl vermischt. Dazu gibt man 15 g einer 25 Gew.-% igen Lösung von Citronensäure in einem Teilester aus Maleinsäureanhydrid und Dipropylenglykol und compoundiert die Mischung in einem handelsüblichen Labordissolver.

Nach dem Entgasen der Mischung wird die Masse in üblicher Weise auf eine Trägerpappe aufgerakelt und unter UV-Licht mit einer Wellenlänge von 295 bis 400 nm ausgehärtet.

Der so erhaltene Deckstrich ist farblos und nicht klebrig.

## Patentansprüche

1. Verfahren zur Herstellung eines Flächengebildes aus mindestens einer Trägerschicht (I) und mindestens einem Deckstrich (II), gegebenenfalls einem unter der Trägerschicht (I) angeordneten Rückenstrich (III) aus einer chemisch oder mechanisch geschäumten Schaumschicht, gegebenenfalls einem Kompakt- oder Grundstrich (IV), der zwischen Trägerschicht (I) und Deckstrich (II) und/oder zwischen Trägerschicht (I) und Rückenstrich (III) angeordnet ist, gegebenfalis eine unter dem Deckstrich (II) angeordnete chemische Schaumschicht (V), wobei die Beschichtungsmassen für die Schichten (II), (III), (IV) und (V) ein durch Umsetzung von mindestens einer Di- oder Polycarbonsäure oder deren Derivaten oder einem Gemisch davon mit mindestens einem Epoxidierungsprodukt eines Carbonsäureesters oder einem Gemisch dieser Epoxidierungsprodukte erhältliches Polyreaktionsprodukte-enthaltendes Material enthalten, worin mindestens die Schicht (II) im wesentlichen mit UV-Strahlung in Gegenwart von mindestens einem UV-Initiator, der in die Mischung für die auszuhärtende Schicht compoundiert wird, und/oder mit Elektronenstrahlung und/oder IR-Strahlung gehärtet wird.

2. Verfahren nach Anspruch 1, worin die Schicht (II) mit UV-Strahlung teilweise gehärtet wird, danach eine Prägung der teilweise gehärteten Schicht (II) erfolgt und anschließend die geprägte, teilweise gehärtete Schicht (II) mit UV-Strahlung und/oder Elektronenstrahlung und/oder IR-Strahlung und/oder thermisch ausgehärtet wird.

3. Verfahren nach Anspruch 1 oder 2, wobei der UV-Initiator ein radikalischer oder kationischer UV-Initiator oder ein Gemisch davon ist.

4. Verfahren nach Anspruch 3, wobei der radikalische UV-Initiator Benzophenon, ein Benzophenon-Derivat, ein Phosphinoxid, ein α-Morpholinoketon, Chinon, ein Chinon-Derivat oder ein α-Hydroxyketon oder ein Gemisch davon ist.

5. Verfahren nach Anspruch 3, wobei der kationische UV-Initiator ein Triarylsulfoniumsalz oder ein Gemisch verschiedener Triarylsulfoniumsalze, oder ein Diaryliodoniumsalz oder ein Gemisch davon ist.

6. Verfahren nach einem der Ansprüche 1 bis 5, wobei der UV-Initiator in einer Menge von bis zu 8 Gew.-%, vorzugsweise 0,1 bis 3 Gew.-%, bezogen auf die Menge des Reaktionsprodukte-enthaltenden Materials, verwendet wird.

7. Verfahren nach einem der Ansprüche 1 bis 6, wobei das Polyreaktionsprodukte-enthaltende Material weiter mindestens einen Zusatzstoff aus der Gruppe, bestehend aus Füllstoffen, Pigmenten, Treibmitteln, Hydrophobierungsmitteln und Hilfsstoffen, umfaßt.

8. Verfahren nach einem der Ansprüche 1 bis 7, wobei die Dicarbonsäure in dem Polyreaktionsprodukte-enthaltenden Material Maleinsäure, Itaconsäure, Fumarsäure, Bernsteinsäure, Methylbernsteinsäure, Äpfelsäure oder Furandicarbonsäure oder ein mindestens zwei dieser Säuren enthaltendes Gemisch davon ist.

9. Verfahren nach einem der Ansprüche 1 bis 7, wobei die Polycarbonsäure in dem Polyreaktionsprodukte-enthaltenden Material aus Citronensäure oder Aconitsäure ausgewählt ist.

10. Verfahren nach einem der Ansprüche 1 bis 9, wobei das Derivat der Dioder Polycarbonsäure in dem Polyreaktionsprodukte-enthaltenden Material ein Anhydrid oder Teilester ist.

11. Verfahren nach Anspruch 10, wobei die Alkohol-Komponente des Teilesters ein Polyol ist.

12. Verfahren nach Anspruch 11, wobei das Polyol Dipropylenglykol, ein Propandiol, ein Butandiol, ein Hexandiol, ein Hexantriol, Glycerin oder Pentaerythrit oder ein mindestens zwei dieser Polyole enthaltendes Gemisch davon ist.

13. Verfahren nach einem der vorhergehenden Ansprüche 1 bis 12, wobei das Gemisch von mindestens einer Di- oder Polycarbonsäure oder deren Derivate ein Gemisch eines Teilesters aus Maleinsäureanhydrid und Dipropylenglykol mit Citronensäure ist.

14. Verfahren nach einem der Ansprüche 1 bis 13, wobei das Epoxidierungsprodukt eines Carbonsäureesters mehr als eine Epoxygruppe pro Molekül enthält.

15. Verfahren nach einem der Ansprüche 1 bis 14, wobei das Epoxidierungsprodukt eines Carbonsäureesters epoxidiertes Leinöl, epoxidiertes Sojaöl, epoxidiertes Rizinusöl, epoxidiertes Rapsöl oder Vernoniaöl oder ein mindestens zwei dieser Epoxidierungsprodukte enthaltendes Gemisch davon ist.

16. Verfahren nach einem der Ansprüche 7 bis 15, wobei der Füllstoff Holzmehl, Kreide, Cellulose, Lignin oder Korkmehl oder ein mindestens zwei dieser Füllstoffe enthaltendes Gemisch davon ist.

17. Verfahren nach einem der Ansprüche 7 bis 16, wobei der Hilfsstoff aus der Gruppe, bestehend aus Tallölen, synthetischen oder natürlichen Harzen und Sikkativen, ausgewählt ist.

18. Verfahren nach einem der vorgehenden Ansprüche, wobei der Deckstrich (II) transparent ausgebildet wird.

19. Verfahren nach einem der Ansprüche 1 bis 18, worin unter dem Deckstrich (II) ein chemischer Schaumstrich (V) zum chemischen Prägen angeordnet wird.

20. Verfahren nach einem der Ansprüche 1 bis 19, worin über dem Deckstrich (II) eine Schutzschicht (VI) aus ungesättigten härtbaren Lacksystemen angeordnet wird, wobei die Polymere oder Copolymere für die Lacksysteme ausgewählt sind aus der Gruppe, bestehend aus Polyacrylaten, Polymethacrylaten, Polyurethanen und Mischungen davon.

21. Verfahren nach einem der Ansprüche 1 bis 20, wobei die Beschichtungsmasse für den Deckstrich (II) ein Hydrophobierungsmittel, vorzugsweise in einer Menge von 7 bis 44 Gew.-%, bezogen auf die Menge des Reaktionsprodukte-enthaltenden Materials, enthält.

22. Verfahren nach einem der Ansprüche 1 bis 21, wobei in der Beschichtungsmasse für den Deckstrich (II) nicht mehr als 8 Gew.-%, vorzugsweise nicht mehr als 2 Gew.-%, Füllstoff enthalten sind.

23. Verfahren nach einem der Ansprüche 1 bis 22, wobei in der Beschichtungsmasse für den Kompakt- oder Grundstrich (IV) 10 bis 60 Gew.-% Füllstoff, insbesondere 30 Gew.-% Füllstoff, bezogen auf die Menge des Reaktionsprodukte-enthaltenden Materials, vorliegen.

24. Verfahren nach einem der Ansprüche 1 bis 23, wobei in der Beschichtungsmasse für die chemisch geschäumte Schaumschicht (V) 20 bis 65 Gew.-% Füllstoff, insbesondere 35 Gew.-% Füllstoff, bezogen auf die Menge des Reaktionsprodukte-enthaltenden Materials, vorliegen.

25. Verfahren nach einem der Ansprüche 1 bis 24, wobei in der Beschichtungsmasse für die mechanisch geschäumte Schaumschicht bis zu 10 Gew.-% Füllstoff, bezogen auf die Menge des Reaktionsprodukte-enthaltenden Materials, vorliegen.

## Claims

1. Process for preparing a sheetlike structure composed of at least one base layer (I) and at least one topcoat (II), optionally, disposed underneath the base layer (I), a backcoat (III) composed of a chemically or mechanically foamed cellular layer, optionally a noncellular basecoat (IV) disposed between the base layer (I) and the topcoat (II) and/or between the base layer (I) and the backcoat (III), optionally, disposed underneath the topcoat (II), a chemically foamed layer (V) by employing as coating compositions for the layers (II), (III), (IV) and (V) a polymeric material obtainable by reaction of at least one di- or polycarboxylic acid or derivatives thereof or a mixture thereof with at least one epoxidation product of a carboxylic ester or a mixture of these epoxidation products, wherein at least the layer (II) is cured essentially with UV radiation in the presence of at least one UV initiator compounded into the mixture of the layer to be cured and/or with electron beam radiation and/or IR radiation.

2. Process according to Claim 1, wherein the layer (II) is partially cured with UV radiation, then embossed and subsequently cured with UV radiation and/or electron beam radiation and/or IR radiation and/or thermally.

3. Process according to Claim 1 or 2, wherein the UV initiator is a free-radical or cationic UV initiator or a mixture thereof.

4. Process according to Claim 3, wherein the free-radical UV initiator is benzophenone, a benzophenone derivative, a phosphine oxide, an α-morpholinoketone, quinone, a quinone derivative or an α-hydroxyketone or a mixture thereof.

5. Process according to Claim 3, wherein the cationic UV initiator is a triarylsulphonium salt or a mixture of various triarylsulphonium salts or a diaryliodonium salt or a mixture thereof.

6. Process according to any of Claims 1 to 5, wherein the UV initiator is used in an amount of up to 8% by weight, preferably 0.1 to 3% by weight, based on the amount of the polymeric material.

7. Process according to any of Claims 1 to 6, wherein the polymeric material further comprises at least one additive selected from the group consisting of fillers, pigments, blowing agents, hydrophobicizing agents and auxiliaries.

8. Process according to any of Claims 1 to 7, wherein the dicarboxylic acid in the polymeric material is maleic acid, itaconic acid, fumaric acid, succinic acid, methylsuccinic acid, malic acid or furandi-carboxylic acid or a mixture comprising at least two thereof.

9. Process according to any of Claims 1 to 7, wherein the polycarboxylic acid in the polymeric material is selected from the group consisting of citric acid and aconitic acid.

10. Process according to any of Claims 1 to 9, wherein the derivative of the di- or polycarboxylic acid in the polymeric material is an anhydride or a partial ester.

11. Process according to Claim 10, wherein the alcohol component of the partial ester is a polyol.

12. Process according to Claim 11, wherein the polyol is dipropylene glycol, a propanediol, a butanediol, a hexanediol, a hexanetriol, glycerol or pentaerythritol or a mixture comprising at least two thereof.

13. Process according to any of the preceding Claims 1 to 12, wherein the mixture of at least one di- or polycarboxylic acid or derivatives thereof is a mixture of a partial ester of maleic anhydride and dipropylene glycol with citric acid.

14. Process according to any of Claims 1 to 13, wherein the epoxidation product of a carboxylic ester contains more than one epoxy group per molecule.

15. Process according to any of Claims 1 to 14, wherein the epoxidation product of a carboxylic ester is epoxidated linseed oil, epoxidated soybean oil, epoxidated castor oil, epoxidated rapeseed oil or vernonia oil or a mixture comprising at least two thereof.

16. Process according to any of Claims 7 to 15, wherein the filler is wood flour, chalk, cellulose, lignin or cork flour or a mixture comprising at least two thereof.

17. Process according to any of Claims 7 to 16, wherein the auxiliary is selected from the group consisting of tall oils, synthetic or natural resins and siccatives.

18. Process according to any preceding claim, wherein the topcoat (II) is transparent.

19. Process according to any of Claims 1 to 18, wherein a chemically foamed coat (V) for chemical embossing is disposed underneath the topcoat (II).

20. Process according to any of Claims 1 to 19, wherein the topcoat (II) has disposed on it a protective layer (VI) composed of unsaturated curable film-forming systems for which the polymers or copolymers are selected from the group consisting of polyacrylates, polymethacrylates, polyurethanes and mixtures thereof.

21. Process according to any of Claims 1 to 20, wherein the coating composition for the topcoat (II) includes a hydrophobicizing agent, preferably in an amount of 7 to 44% by weight, based on the amount of the polymeric material.

22. Process according to any of Claims 1 to 21, wherein the coating composition for the topcoat (II) includes not more than 8% by weight and preferably not more than 2% by weight of filler.

23. Process according to any of Claims 1 to 22, wherein the coating composition for the noncellular basecoat (IV) includes 10 to 60% by weight of filler and especially 30% by weight of filler, based on the amount of the polymeric material.

24. Process according to any of Claims 1 to 23, wherein the coating composition for the chemically foamed cellular layer (V) includes 20 to 65% by weight of filler and especially 35% by weight of filler, based on the amount of the polymeric material.

25. Process according to any of Claims 1 to 24, wherein the coating composition for the mechanically foamed cellular layer includes up to 10% by weight of filler, based on the amount of the polymeric material.

## Revendications

1. Procédé de production d'un corps plan constitué d'au moins une couche de support (I) et d'au moins une couche de couverture (II), le cas échéant, d'une couche dorsale (III) disposée sous la couche de support (I) formée d'une couche de mousse rendue cellulaire chimiquement ou mécaniquement, le cas échéant, d'une couche compacte ou couche de fond (IV) qui est disposée entre la couche de support (I) et la couche de couverture (II) et/ou entre la couche de support (I) et la couche dorsale (III), le cas échéant, d'une couche de mousse (V) chimique disposée sous la couche de couverture (II), les enduits pour les couches (II), (III), (IV) et (V) renfermant une matière contenant des produits de polyréaction, obtenue par réaction d'au moins un acide dicarboxylique ou polycarboxylique ou des dérivés de ces acides ou de leur mélange avec au moins un produit d'époxydation d'un ester d'acide carboxyliqre ou un mélange de ces produits d'époxydation, dans lequel au moins la couche (II) est durcie principalement par rayonnement ultraviolet en présence d'au moins un initiateur UV qui est incorporé au mélange pour la couche à durcir, et/ou par rayonnement électronique et/ou par rayonnement infrarouge.

2. Procédé suivant la revendication 1, dans lequel la couche (II) est partiellement durcie par rayonnement ultraviolet, après quoi un gaufrage de la couche (II) partiellement durcie est effectué, pour la couche (II) gaufrée partiellement durcie est durcie totalement par rayonnement ultraviolet et/ou par rayonnement électronique et/ou par rayonnement infrarouge et/ou thermiquement.

3. Procédé suivant la revendication 1 ou 2, dans lequel l'initiateur UV est un initiateur UV radicalaire ou cationique ou un mélange de tels initiateurs.

4. Procédé suivant la revendication 3, dans lequel l'initiateur UV radicalaire est la benzophénone, un dérivé de benzophénone, un oxyde de phosphine, une α-morpholino-cétone, la quinone, un dérivé de quinone ou une α-hydroxycétone ou un mélange de ces composés.

5. Procédé suivant la revendication 3, dans lequel l'initiateur UV cationique est un sel de triarylsulfonium ou un mélange de différents sels de triarylsulfonium ou un sel de diaryliodonium ou un mélange de ces composés.

6. Procédé suivant l'une des revendications 1 à 5, dans lequel l'initiateur UV est utilisé en une quantité allant jusqu'à 8 % en poids, de préférence de 0,1 à 3 % en poids par rapport à la quantité de la matière contenant des produits de réaction.

7. Procédé suivant l'une des revendications 1 à 6, dans lequel la matière contenant des produits de polyréaction comprend en outre au moins un additif du groupe constitué de charges, de pigments, d'agents porogènes, d'agents conférant le caractère hydrophobe et de substances auxiliaires.

8. Procédé suivant l'une des revendications 1 à 7, dans lequel l'acide dicarboxylique présent dans la matière contenant des produits de polyréaction est l'acide maléique, l'acide itaconique, l'acide fumarique, l'acide succinique, l'acide méthylsuccinique, l'acide malique ou l'acide furannedicarboxylique ou un mélange contenant au moins deux de ces acides.

9. Procédé suivant l'une des revendications 1 à 7, dans lequel l'acide polycarboxylique présent dans la matière contenant des produits de polyréaction est choisi entre l'acide citrique et l'acide aconitique.

10. Procédé suivant l'une des revendications 1 à 9, dans lequel le dérivé d'acide dicarboxylique ou polycarboxylique présent dans la matière contenant des produits de polyréaction est un anhydride ou un ester partiel.

11. Procédé suivant la revendication 10, dans lequel le composant alcool de l'ester partiel est un polyol.

12. Procédé suivant la revendication 11, dans lequel le polyol est le dipropylène-glycol, un propanediol, un butanediol, un hexanediol, un hexanetriol, le glycérol ou le pentaérythritol ou un mélange contenant au moins deux de ces polyols.

13. Procédé suivant l'une des revendications 1 à 12 précédentes, dans lequel le mélange d'au moins un acide dicarboxylique ou polycarboxylique ou de leurs dérivés est un mélange d'acide citrique et d'un ester partiel d'anhydride maléique et de dipropylène-glycol.

14. Procédé suivant l'une des revendications 1 à 13, dans lequel le produit d'époxydation d'un ester d'acide carboxylique contient plus d'un groupe époxy par molécule.

15. Procédé suivant l'une des revendications 1 à 14, dans lequel le produit d'époxydation d'un ester d'acide carboxylique est l'huile de lin époxydée, l'huile de soja époxydée, l'huile de ricin époxydée, l'huile de colza époxydée ou l'huile de Vernonia ou un mélange contenant au moins deux de ces produits d'époxydation.

16. Procédé suivant l'une des revendications 7 à 15, dans lequel la charge est de la farine de bois, de la craie, de la cellulose, de la lignine ou de la farine de liège ou un mélange contenant au moins deux de ces charges.

17. Procédé suivant l'une des revendications 7 à 16, dans lequel la substance auxiliaire est choisie dans le groupe comprenant des tallols, des résines synthétiques ou naturelles et des siccatifs.

18. Procédé suivant l'une des revendications précédentes, dans lequel la couche de couverture (II) est réalisée transparente.

19. Procédé suivant l'une des revendications 1 à 18, dans lequel une couche de mousse chimique (V) destinée au gaufrage chimique est disposée sous la couche de couverture (II).

20. Procédé suivant l'une des revendications 1 à 19, dans lequel une couche de protection (VI) constituée de systèmes de laques durcissables non saturés est disposée par-dessus la couche de couverture (II), les polymères ou copolymères pour les systèmes de laques étant choisis dans le groupe comprenant des polyacrylates, des polyméthacrylates, des polyuréthannes et leurs mélanges.

21. Procédé suivant l'une des revendications 1 à 20, dans lequel l'enduit pour la couche de couverture (II) contient un agent conférant le caractère hydrophobe, de préférence en une quantité de 7 à 44 % en poids par rapport à la quantité de la matière contenant des produits de réaction.

22. Procédé suivant l'une des revendications 1 à 21, dans lequel l'enduit pour la couche de couverture (II) ne contient pas plus de 8 % en poids et de préférence pas plus de 2 % en poids de charge.

23. Procédé suivant l'une des revendications 1 à 22, dans lequel 10 à 60 % en poids de charge, en particulier 30 % en poids de charge, par rapport à la quantité de matière contenant des produits de réaction, sont présents dans l'enduit pour la couche compacte ou couche de fond (IV).

24. Procédé suivant l'une des revendications 1 à 23, dans lequel 20 à 65 % en poids de charge, en particulier 35 % en poids de charge, par rapport à la quantité de matière contenant des produits de réaction, sont présents dans l'enduit pour la couche de mousse (V) rendue cellulaire chimiquement.

25. Procédé suivant l'une des revendications 1 à 24, dans lequel jusqu'à 10 % en poids de charge par rapport à la quantité de matière contenant des produits de réaction sont présents dans l'enduit pour la couche de mousse rendue cellulaire mécaniquement.
